# EUROPEAN PATENT SPECIFICATION

(11) **EP 2 578 343 B1**
(45) Date of publication and mention of the grant of the patent: **01.06.2016**
(21) Application number: 11789730.6
(22) Date of filing: 30.05.2011
(51) Int. Cl.: B23H 7/08

(54) **ELECTRODE WIRE FOR ELECTRICAL DISCHARGE MACHINING**
ELEKTRODENDRAHT FÜR EINE ELEKTROEROSIVBEARBEITUNG
FIL-ÉLECTRODE POUR USINAGE PAR DÉCHARGE ÉLECTRIQUE

(30) Priority: 04.06.2010 JP 2010128357
(43) Date of publication of application: 10.04.2013
(73) Proprietor: Suzuki Metal Industry Co., Ltd., Tokyo 100-0005 (JP)
(72) Inventor: KASADA,Hideki, Narashino-shi Chiba 275-8577 (JP); YARITA,Hiroshi, Narashino-shi Chiba 275-8577 (JP); SHIMODA,Hideaki, Narashino-shi Chiba 275-8577 (JP)
(74) Representative: Vossius & Partner Patentanwälte Rechtsanwälte mbB
(86) International application number: PCT/JP2011/062302
(87) International publication number: WO 2011/152327

(56) References cited:
- WO-A1-2005/097387
- JP-A- 3 066 524
- JP-A- H09 103 922
- JP-A- 2000 107 943
- JP-A- 2000 107 943
- US-A- 4 837 416
- ABBAS A R ET AL: "Optimizing SUS 304 wire drawing process by grey relational analysis utilizing Taguchi method", JOURNAL OF UNIVERSITY OF SCIENCE AND TECHNOLOGY BEIJING, MINERAL, METALLURGY, MATERIAL,, vol. 15, no. 6, 1 December 2008 (2008-12-01), pages 714-722, XP025846319, ISSN: 1005-8850, DOI: 10.1016/S1005-8850(08)60276-5 [retrieved on 2008-12-01]

## Description

### TECHNICAL FIELD

The present invention relates to an electrode wire for electric discharge machining.

### BACKGROUND ART

In a fine wire electric discharge machining used for a mold of a semiconductor lead frame and the like, diameter reduction of electrode wires is in progress. In particular, with respect to a small diameter electrode wire for electric discharge machining with 0.1 mm or less wire diameter, because high strength is indispensable, electrode wires with a high strength high carbon steel wire for a core wire and an alloy coating layer of Cu and Zn or a two-layer structure with Cu in the first layer and Zn in the second layer for improving electric discharge machinability on the outer periphery of the core wire and the like have been productized and have been circulated.

However, because these electrode wires were exposed to a high temperature in electric discharge machining, machining was not possible with high tension in electric discharge machining when a raw material with low heat resistance was used. Therefore, there was a problem that vibration of the electrode wire increased due to an explosion caused by sharp rise of the temperature and the cutting accuracy deteriorated.

With respect to the electrode wire for electric discharge machining, various proposals have been made from the past. For example, in Japanese Unexamined Patent Application Publication No. H03-111126 (Patent Literature 1 below), an electrode wire for electric discharge machining is described in which, a coating layer of copper is formed on the surface of a metal wire of a hard steel wire, stainless steel wire, brass wire and the like and a coating layer of zinc is formed further on top thereof, thereby a coating layer of a two-layer structure with 0.2 to 20 µm thickness of the total coating layer is formed, and graphite particles with 10 µm or less average grain size are dispersed in either one of the coating layers or both the coating layers, thereby stable discharging is obtained without the event that copper is molten due to the heat of the electric discharge machining and is fused to a workpiece, and machining speed can be improved.

However, the method of the Patent Literature 1 had problems that it was necessary to disperse the graphite particles in the coating, the manufacturing process was complicated, and the production cost was high.

Also, in Japanese Unexamined Patent Application Publication No. H09-103922 (Patent Literature 2 below), which may be regarded closest state of the art an electrode wire for wire electric discharge machining is described which is formed of stainless steel with 200 to 300 Kgf/mm² (about 2000 to 3000 N/mm²) tensile strength and 0.05 to 0.20 mm wire diameter, has 1 to 3% specific electric conductivity, thereby can remarkably improve the machining accuracy and the surface roughness of a workpiece, does not require a surface polishing step after electric discharge machining, and can reduce the manufacturing cost of the electrode wire and the maintenance cost of an electric discharge machine.

However, the one described in the Patent Literature 2 had a problem that electric discharge machining performance was not sufficient because the stainless steel wire without coating was used.
[Patent Literature 1] Japanese Unexamined Patent Application Publication No. H03-111126
[Patent Literature 2] Japanese Unexamined Patent Application Publication No. H09-103922

### DISCLOSURE OF THE INVENTION

### TECHNICAL PROBLEM

An object of the present invention is to provide an electrode wire for electric discharge machining solving such problems of the related art as described above, capable of suppressing drop of the tensile strength even when electric discharge energy is increased, capable of improving cutting accuracy of a workpiece, and capable of improving machining speed.

### SOLUTION TO PROBLEM

The present invention has been developed as a result of intensive studies in order to solve the problem described above, and is characterized in the contents below which are as described in Claims.
(1) An electrode wire for electric discharge machining in which a stainless steel wire is made as a core wire, nickel (Ni) is coated on an outer periphery of the core wire, then copper (Cu) and zinc (Zn) are coated in this order, and tensile strength is 1,900 N/mm² or more.
(2) The electrode wire for electric discharge machining as described in (1) in which thickness of the nickel (Ni) is 0.01 to 2.0 µm.
(3) The electrode wire for electric discharge machining as described in (1) or (2) in which the tensile strength of the electrode wire at an ordinary temperature is 1,900 to 3,200 N/mm², and the tensile strength of the electrode wire at 400°C is 70% or more of the tensile strength at the ordinary temperature.
(4) The electrode wire for electric discharge machining as described in any one of (1) to (3) in which an outside diameter θ of a cross section of the electrode wire after drawing work is 0.03 mm to 0.1 mm.
(5) The electrode wire for electric discharge machining as described in any one of (1) to (4) subjected to heat treatment of alloying the copper (Cu) and the zinc (Zn).
(6) The electrode wire for electric discharge machining as described in any one of (1) to (5) subjected to straightening work by hot stretching work.

According to the present invention, such a remarkable effect industrially useful is exerted that an electrode wire for electric discharge machining can be provided which is capable of suppressing drop of the tensile strength even when the electric discharge energy is increased, capable of improving the cutting accuracy of a workpiece, and capable of improving the machining speed, and the like.

### BRIEF DESCRIPTION OF DRAWINGS

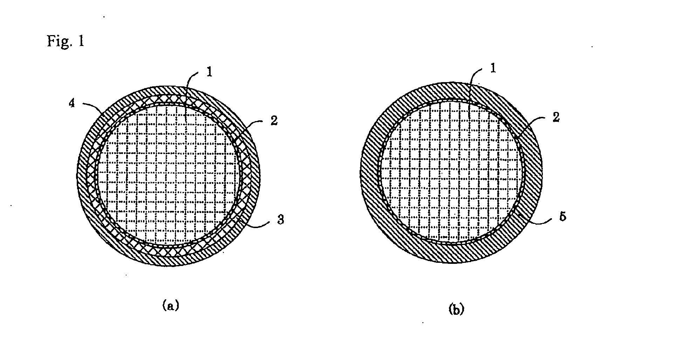

[Fig. 1] Fig. 1 is a cross-sectional view exemplarily showing an electrode wire for electric discharge machining of the present invention.

### REFERENCE SIGN LIST

- 1: core wire
- 2: Ni coating
- 3: Cu coating
- 4: Zn coating
- 5: Cu and Zn alloyed coating

### DESCRIPTION OF EMBODIMENTS

Below, embodiments of the present invention will be described. Fig. 1 is a cross-sectional view exemplarily showing an electrode wire for electric discharge machining of the present invention. As shown in Fig. 1(a), the electrode wire for electric discharge machining of the present invention is an electrode wire in which a stainless steel wire is made as a core wire 1, nickel (Ni) 2 is coated on an outer periphery of the core wire 1, then copper (Cu) 3 and zinc (Zn) 4 are coated in this order, and is characterized that the tensile strength is 1,900 N/mm² or more.

In electric discharge machining, by applying high tension to the electrode wire, stable machining speed and excellent cutting accuracy can be obtained. However, when electric discharging energy is increased, that is when voltage and current are great, in order to increase the machining speed, the electrode wire is heated. Accordingly, even when an electrode wire with high strength is used, when it is inferior in heat resistance, machining at high tension is not possible, and therefore stable machining speed and excellent cutting accuracy cannot be obtained.

In the present invention, by making the core wire of a stainless steel wire excellent in heat resistance, even when the electric discharging energy is increased, high tension can be obtained, and the machining speed can be improved. Although any kind of stainless steel can be used in the present invention, it is preferable to use SUS304 stainless steel from the viewpoint of versatility and high-nitrogen stainless steel whose strength can be increased, and the like.

Also, in conventional electrode wires, because the electrode wire temperature rose due to electric discharge machining, it was not possible to lower the feeding speed of the electrode wire.

Because the electrode wire for electric discharge machining of the present invention is excellent in heat resistance even when the electrode wire temperature rises, consumption of the electrode wire can be reduced by lowering the feeding speed of the electrode wire.

Also, the concept of the small diameter electrode wire for electric discharge machining of related arts for fine machining was to apply a high strength one for the core wire to keep the high strength, and to arrange a coating layer such as an alloy coating layer of Cu and Zn or that of a two-layer structure with Cu in the first layer and Zn in the second layer for improving electric discharge machinability on the outer periphery of the core wire. That is, the electrode wire was manufactured so as to combine two functions of achieving the high strength by the core wire and improving the electric discharge machinability by the outer layer coating.

By these two functions only, even when the strength was increased, machining with high tension was not possible at a high temperature in electric discharge machining, and therefore stable machining speed and excellent cutting accuracy could not be obtained.

In order to solve the problem described above, in the present invention, the core wire is not only high-strengthened but is also provided with two functions of high-strengthening and high heat resistance, then nickel (Ni) that is a raw material having thermal diffusivity higher than and a coefficient of linear expansion lower than that of the core material is coated, heat generated by electric discharge is diffused, expansion is reduced, and thereby the strain is suppressed. In an outermost layer, copper (Cu) and zinc (Zn) that are raw materials for improving the electric discharge machinability are coated. That is, the electrode wire for electric discharge machining of the present invention is an electrode wire for electric discharge machining having all of the strength keeping function, heat resistance function, strain suppressing function, and a function of improving electric discharge machining.

Thus, an electrode wire for electric discharge machining can be provided which is capable of improving cutting accuracy of an workpiece, suppressing drop of tension even when electric discharge energy is increased, that is, improving the electric discharge machinability, and capable of cutting a same quantity when compared with prior arts even when the feeding speed of the electrode wire is made slow, that is also excellent in economic efficiency which were the objects described above.

Also, in order to suppress thermal conduction of the heat generated by electric discharge to the core wire, it is preferable that the thickness of the nickel (Ni) is 0.01 to 2.0 µm. It is preferable that the tensile strength of the electrode wire at an ordinary temperature is 1,900 to 3,200 N/mm², and the tensile strength of the electrode wire at 400°C is 70% or more of the tensile strength at the ordinary temperature.

Also, it is preferable that the outside diameter of a cross section of the electrode wire after drawing work is Φ0.03 mm to 0.1 mm corresponding to the type of an electric discharge machining apparatus applied.

Further, coatings of the copper (Cu) and zinc (Zn) may be layers independent from each other respectively, however by performing heat treatment and alloying as shown in Fig. 1(b), adhesiveness can be improved.

In addition, by subjecting the electrode wire to straightening work by hot stretching work, not only vibration in electric discharge machining can be further reduced, but also automatic wiring can be performed excellently.

### Examples

The result of executing the present invention under the condition described below is shown in Table 1. The fundamental manufacturing process of the examples is using a stainless steel wire or a high carbon steel wire for a core material, performing coating for providing required functions, finishing into a product wire diameter by intensive working, and further performing a heat treatment for straightening. The examples shown in the table below were evaluated by those finished into the wire diameter of 0.05 mm.

In invention examples 1 to 8, SUS304 stainless steel wire (stainless steel A) or stainless steel added with nitrogen (stainless steel B) was used for a core wire, Ni was coated, next Cu and then Zn were coated, heat treatment for alloying was performed in the case with diffusion, intensive working was performed changing the degree of machining respectively, and those with different tensile strength were manufactured. Also, the thickness of Ni at the time of evaluation was made 0.01 to 0.2 µm, and the thickness of those obtained by alloying Cu and Zn was made 5 µm. It was confirmed that, in invention example 1 to 10, the tensile strength at 400°C was 70% or more compared with the case the tensile strength at an ordinary temperature was made 100, and the machining speed was improved by 10% or more compared with Comparative Example 4 that was of the material of the prior art.

In Comparative Examples 1 to 4 and invention examples 1 to 4, the diffusion treatment was performed, and in Comparative Examples 5 to 8 and invention examples 5 to 8, the diffusion treatment was not performed.

In Comparative Example 1, because Ni was not coated, the machining speed was low.

In invention example 1, because Ni was coated, the machining speed was high.

In invention example 2, the thickness of Ni coating was 0.15 µm, and the machining speed was highest among those in which stainless steel A was used and the diffusion treatment was performed.

In invention example 3, because the thickness of Ni coating was 2 µm and the cross-sectional area of the core wire was small, the tensile strength dropped, however the machining speed was higher compared with Comparative Example 8.

In Comparative Example 2, the thickness of Ni coating was 3 µm, the cross-sectional area of the core wire became too small and the tensile strength was low, which were out of the range of the invention, and therefore the machining speed became lower than that of Comparative Example 8.

In Comparative Example 3, the tensile strength of the core wire was lowered, and the thickness of Ni coating was made 0.15 µm which was same with invention example 2 with a high machining speed, however the machining speed was lower than that of Comparative Example 8.

In invention example 4, because stainless steel B was used that had the tensile strength higher than that of stainless steel A, the machining speed was further higher compared with one that used stainless steel A.

In Comparative Example 4, because the core wire was of carbon steel, the tensile strength at 400°C was low.

In Comparative Example 5, because Ni was not coated, the machining speed was low.

In invention example 5, because Ni was coated, the machining speed was high.

In invention example 6, the thickness of Ni coating was 0.15 µm, and the machining speed was highest among those in which stainless steel A was used and the diffusion treatment was not performed.

In invention example 7, the thickness of Ni coating was 2 µm and the cross-sectional area of the core wire was small, and therefore the tensile strength became low, however the machining speed was higher compared with Comparative Example 8.

In Comparative Example 6, the thickness of Ni coating was 3 µm, the cross-sectional area of the core wire became too small and the tensile strength was low, which were out of the range of the invention, and therefore the machining speed became lower than that of Comparative Example 8.

In Comparative Example 7, the tensile strength of the core wire was lowered and the thickness of Ni coating was made 0.15 µm which was same with invention example 6 with a high machining speed, however the machining speed was lower than that of Comparative Example 8.

In invention example 8, because stainless steel B was used that had the tensile strength higher than that of stainless steel A, the machining speed was further higher compared with one that used stainless steel A.

In Comparative Example 8, because the core wire was of carbon steel, the tensile strength at 400°C was low.

By the examples described above, the effect of the present invention was confirmed.

**[Table 1]**

| | Steel kind | Tensile strength at ordinary temperature | Plating thickness | | | Diffusion | Tensile strength at 400°C | Machining speed |
|---|---|---|---|---|---|---|---|---|
| | Core wire | | Ni | Cu | Zn | | | |
| | | N/mm² | µm | µm | µm | | % | - |
| Comparative Example 1 | Stainless steel A | 2450 | 0 | 3 | 2 | With | 81 | 80 |
| Inventive Example 1 | Stainless steel A | 2450 | 0.01 | 3 | 2 | With | 75 | 120 |
| Inventive Example 2 | Stainless steel A | 2450 | 0.15 | 3 | 2 | With | 75 | 130 |
| Inventive Example 3 | Stainless steel A | 2020 | 2 | 3 | 2 | With | 81 | 110 |
| Comparative Example 2 | Stainless steel A | 1805 | 3 | 3 | 2 | With | 81 | 80 |
| Comparative Example 3 | Stainless steel A | 1805 | 0.15 | 3 | 2 | With | 81 | 80 |
| Inventive Example 4 | Stainless steel B | 3200 | 0.15 | 3 | 2 | With | 81 | 170 |
| Comparative Example 4 | Carbon steel | 2450 | 0.15 | 3 | 2 | With | 47 | 80 |
| Comparative Example 5 | Stainless steel A | 2250 | 0 | 3 | 2 | Without | 81 | 80 |
| Inventive Example 5 | Stainless steel A | 2250 | 0.01 | 3 | 2 | Without | 75 | 150 |
| Inventive Example 6 | Stainless steel A | 2250 | 0.15 | 3 | 2 | Without | 75 | 150 |
| Inventive Example 7 | Stainless steel A | 1920 | 2 | 3 | 2 | Without | 81 | 110 |
| Comparative Example 6 | Stainless steel A | 1605 | 3 | 3 | 2 | Without | 81 | 90 |
| Comparative Example 7 | Stainless steel A | 1605 | 0.15 | 3 | 2 | Without | 81 | 80 |
| Inventive Example 8 | Stainless steel B | 3100 | 0.15 | 3 | 2 | Without | 81 | 180 |
| Comparative Example 8 | Carbon steel | 2450 | 0.15 | 3 | 2 | Without | 47 | 100 |

| | | | | | | | | |
|---|---|---|---|---|---|---|---|---|
| Remarks) ·The tensile strength was evaluated defining the tensile strength at an ordinary temperature as 100. ·The machining speed was evaluated defining Comparative Example 8 which was the material of prior art as 100. ·The plating thickness of Cu and Zn of the case with diffusion shows the thickness before alloying treatment. ·The underlined one shows one out of the scope of the invention. | | | | | | | | |

## Claims

1. An electrode wire for electric discharge machining, wherein a stainless steel wire is made a core wire, nickel (Ni) is coated on an outer periphery of the core wire, then copper (Cu) and zinc (Zn) are coated in this order, and tensile strength is 1,900 N/mm² or more.

2. The electrode wire for electric discharge machining according to claim 1, wherein thickness of the nickel (Ni) is 0.01 to 2.0 µm.

3. The electrode wire for electric discharge machining according to claim 1 or 2, wherein the tensile strength of the electrode wire at an ordinary temperature is 1,900 to 3,200 N/mm², and the tensile strength of the electrode wire at 400°C is 70% or more of the tensile strength at the ordinary temperature.

4. The electrode wire for electric discharge machining according to any one of claims 1 to 3, wherein an outside diameter Φ of a cross section of the electrode wire after drawing work is 0.03 mm to 0.1 mm.

5. The electrode wire for electric discharge machining according to any one of claims 1 to 4 subjected to heat treatment of alloying the copper (Cu) and the zinc (Zn).

6. The electrode wire for electric discharge machining according to any one of claims 1 to 5 subjected to straightening work by hot stretching work.

## Patentansprüche

1. Elektrodendraht für eine elektroerosive Bearbeitung, wobei ein Edelstahldraht zu einem Kerndraht gemacht ist, Nickel (Ni) auf einen Außenumfang des Kerndrahts aufgebracht ist, dann Kupfer (Cu) und Zink (Zn) in dieser Reihenfolge aufgebracht sind, und die Zugfestigkeit 1.900 N/mm² oder mehr beträgt.

2. Elektrodendraht für eine elektroerosive Bearbeitung nach Anspruch 1, wobei die Dicke des Nickels (Ni) 0,01 bis 2,0 µm beträgt.

3. Elektrodendraht für eine elektroerosive Bearbeitung nach Anspruch 1 oder 2, wobei die Zugfestigkeit des Elektrodendrahts bei Normaltemperatur 1.900 bis 3.200 N/mm² beträgt und die Zugfestigkeit des Elektrodendrahts bei 400°C 70% oder mehr als die Zugfestigkeit bei der Normaltemperatur beträgt.

4. Elektrodendraht für eine elektroerosive Bearbeitung nach einem der Ansprüche 1 bis 3, wobei ein Außendurchmesser Φ eines Querschnitts des Elektrodendrahts nach einer Zugbearbeitung 0,03 mm bis 0,1 mm beträgt.

5. Elektrodendraht für eine elektroerosive Bearbeitung nach einem der Ansprüche 1 bis 4, der zum Legieren des Kupfers (Cu) und des Zinks (Zn) einer Wärmebehandlung unterzogen wurde.

6. Elektrodendraht für eine elektroerosive Bearbeitung nach einem der Ansprüche 1 bis 5, der durch eine Warmdehnungsbearbeitung einer Richtbearbeitung unterzogen wurde.

## Revendications

1. Fil-électrode pour usinage par décharge électrique, où un fil en acier inoxydable constitue un fil d'âme, la surface extérieure du fil d'âme est revêtue de nickel (Ni), puis de cuivre (Cu) et de zinc (Zn) successivement, et où la résistance à la traction est égale ou supérieure à 1.900 N/mm².

2. Fil-électrode pour usinage par décharge électrique selon la revendication 1, où l'épaisseur du nickel (Ni) est comprise entre 0,01 et 2,0 µm.

3. Fil-électrode pour usinage par décharge électrique selon la revendication 1 ou la revendication 2, où la résistance à la traction du fil-électrode à température normale est comprise entre 1.900 et 3.200 N/mm², et où la résistance à la traction du fil-électrode à 400° C représente au moins 70 % de la résistance à la traction à température normale.

4. Fil-électrode pour usinage par décharge électrique selon l'une des revendications 1 à 3, où le diamètre extérieur Ø de la section transversale du fil-électrode après étirage est compris entre 0,03 mm et 0,1 mm.

5. Fil-électrode pour usinage par décharge électrique selon l'une des revendications 1 à 4, soumis à un traitement thermique d'alliage du cuivre (Cu) et du zinc (Zn).

6. Fil-électrode pour usinage par décharge électrique selon l'une des revendications 1 à 5, soumis à un redressage par étirage à chaud.
